# EUROPEAN PATENT APPLICATION

(11) **EP 4 804 425 A1**
(43) Date of publication of application: **09.09.2026**
(21) Application number: 25161585.2
(22) Date of filing: 04.03.2025
(51) Int. Cl.: H04B 7/185

(54) **SATELLITE COMMUNICATION SYSTEMS**

(71) Applicant: Freezz Sàrl, 1020 Renens (CH)
(72) Inventor: The designation of the inventor has not yet been filed
(74) Representative: Cleveland Scott York

(57) **Abstract**

The present invention relates to a satellite communication system comprising at least one satellite base station and at least one ground station, preferably a user equipment (UE), wherein the at least one satellite base station is equipped with a software-defined virtual node and a digital beam forming (DBF) front-end configured to connect directly to the at least one UE.

## Description

### Technical Field

The present invention relates to a satellite communication systems. In particular, the invention relates to a satellite communication system with a novel architecture operating in Very Low Earth Orbit (VLEO).

### Background Art

Satellite communication systems have been a cornerstone of global telecommunications for several decades, providing a wide range of services from television broadcasting to internet access. These systems typically involve the use of one or more satellites in geostationary or low Earth orbit, which communicate with ground-based stations to relay signals over vast distances.

In recent years, there has been a growing demand for higher data rates and more reliable connections, driven by the proliferation of internet-connected devices and the increasing popularity of data-intensive applications. This has led to the development of new technologies and standards aimed at improving the performance of satellite communication systems.

One such technology is software-defined networking (SDN), which allows for the dynamic reconfiguration of network resources to meet changing demands. In the context of satellite communication systems, SDN can be used to optimize the allocation of bandwidth, improve the quality of service, and reduce latency. In addition, SDN can be leveraged in conjunction with network function virtualization (NFV) techniques which can achieve greater flexibility, scalability, and cost-efficiency compared to traditional deployments.

Another important development is the advent of fifth generation (5G) mobile networks, which promise to deliver unprecedented levels of speed, capacity, and reliability. 5G networks are based on a new architecture that includes a range of advanced technologies, such as massive MIMO (multiple input, multiple output), beamforming, and network slicing.

Despite these advancements, there are still significant challenges to be addressed in the design and operation of satellite communication systems. For example, the physical limitations of satellite technology can make it difficult to achieve the high data rates and low latencies that are required for certain applications.

Furthermore, the integration of satellite and terrestrial communication systems presents its own set of challenges. These include issues related to frequency allocation, interference management, and the coordination of network resources. Current broadband wireless networks often present large gaps of coverage and connectivity quality in the world. The terrestrial networks require too high an investment to cover large areas that are scarcely populated which is not economically feasible to remedy.

Satellite communications systems have traditionally helped to reduce these gaps, but even today, the terrestrial and satellite networks are still distinctly separated, and using different spectrum, different protocols and different equipment. This creates technical and economic barriers to providing users with a fully integrated communications solution.

In particular, there is widespread usage of the Non-Terrestrial Network (NTN) spectral band of the 3GPP standard which is dedicated to satellite communications and is regulated by individual countries. The choice of NTN spectrum allows for streamlined prototyping and initial operations, ensuring compliance with national regulations.

Users need to have special equipment to access the satellite network, typically large terminals which are not straightforward to deploy in several applications. The satellite terminals are often more expensive, and need custom electronic components manufactured in much lower quantities than terrestrial wireless components, which results in yet higher costs.

The overall effect is that satellite networks remain confined to niche markets and accordingly, there remains a need to close the gaps in wireless/mobile connectivity.

### Summary of the Invention

Therefore, an object of the present invention is to provide a satellite communication system for use in LEO and VLEO characterized by low power generation and low mass to achieve a sustainable satellite architecture.

According to a first aspect, there is provided a satellite communication system comprising at least one satellite base station and at least one ground station, preferably a user equipment (UE), wherein the at least one satellite base station is equipped with a software-defined virtual node and a digital beam forming (DBF) front-end configured for direct connection with the at least one UE.

Advantageously, the satellite system achieves better signal strength, optimised regional coverage ad augmented capacity with a low satellite count.

In embodiments, the satellite base station is configured to fly in low earth orbit (LEO), more preferably in very low earth orbit (VLEO). Advantageously, this provides consistent, high-quality coverage with maximised energy efficiency, tailored specifically for regional enhancement.

In embodiments, VLEO is defined as 190-320km from the earth.

In embodiments, the diameter of the service zone of the satellite base station flying in VLEO is 400-500km.

In embodiments, the at least one satellite base station comprises a rectangular satellite module. In other embodiments, the at least one satellite base station comprises two interconnected satellite modules. The satellite modules may be hexagonal in shape.

In embodiments, the satellite modules comprise antennas. In embodiments, one antenna is designated for downlink transmission, while the other will handle uplink.

In embodiments, each satellite modules has a surface area of 1.2-1.4m². In embodiments, the satellite modules have a thickness ranging from 10-20 cm.

In embodiments, the satellite modules are mechanically interconnected. In embodiments, the mechanical interconnection is by means of at least one redundant hinge.

In embodiments, the satellite modules are electrically interconnected. In embodiments, the electrical interconnections is by means of flexible RF data and power cables.

In embodiments, the satellite modules comprise an integrated solar panel on a first surface. In embodiments, the satellite modules comprise an antenna aperture on a second surface.

In embodiments, the satellite modules comprise digital signal processor (DSP) boards equipped with direct RF-sampling data converters linked to power amplifiers in the downlink direction on one of the satellite modules, and low noise amplifiers in the uplink direction on the other of the satellite modules. The amplifiers on both modules are connected to the antenna. In embodiments, the DSP is a Field-Programmable Gate Array (FPGA). In embodiments, data cables connect the FPGA to the antenna.

In embodiments, the system utilises fully digital beamforming. In embodiments, the system uses hybrid beamforming which advantageously provides comparable or slightly lower performance to a fully digital beamforming whilst having lower complexity, power consumption and cost.

In embodiments, the DBF front end performs real-time per-beam signal processing to provide optimal UL and DL performances. Advantageously, this minimizes signal distortion at the receiver. In embodiments, the signal processing is at least one of Doppler pre-compensation, channel equalization and Peak-to-Average Power Ratio (PAPR) reduction. Advantageously, performing the per-beam signal processing facilitates a very high granularity of the signal processing in the baseband which can significantly reduce overall costs.

In embodiments, the system further comprises at least another satellite base station. In embodiments, each of the two satellite base stations comprises a laser communication terminal. In embodiments, the laser communication terminals are configured to allow inter-satellite links between the satellite base stations. Advantageously, this ensures seamless coverage across areas lacking ground station access, enhancing the network's redundancy and operational scope

In embodiments, the satellite base stations are linked over distances of up to 1000km. In embodiments, the satellite base stations are linked to form a mesh network. Advantageously, this enhances spatial resolution and data throughput and increases the capacity generated by the two satellites together with respect to the equivalent standalone operation. In this way, the system can achieve up to N-times higher capacity, where N is the number of satellite base stations operating in cooperative MIMO mode. Accordingly, provision of connectivity of a satellite not in view of a ground station thanks to the connection through another satellite the capacity of the constellation is increased without increasing the number of satellites.

In embodiments, the satellite base stations are formed in a flower constellation. This arrangement exploits the periodicity between two rotating frames to place satellites in the same relative trajectory to the rotating reference frame. As a result, a smaller number of satellites are needed, and the full constellation performance can be evaluated in shorter timeframes.

In embodiments, the system employs convex optimization and genetic or Kriging optimization algorithms to derive an optimal constellation capable of meeting time-variant heterogeneous coverage requirements of different regions.

In embodiments, the software-defined virtual node is suitable for at least one of 4G, 5G and provides a platform for easy extension towards 6G.

The software-defined node is virtually realised. Advantageously, this enables dynamic resource allocation, on-the-fly configuration updates, and seamless integration with satellite communication systems, ensuring the system's flexibility and responsiveness to the dynamic needs of 4G/5G networking. The virtual node allows the future use of a 6G spectrum.

Additionally, the virtual solution emphasizes resource efficiency and scalability, allowing for the dynamic allocation of satellite bandwidth, processing power, and storage capacity based on changing demand patterns. By optimizing resource utilization, the efficiency of satellite communication systems is maximised, operational costs are reduced, and cost-effective scaling to accommodate growing user populations and service demands is enabled.

Moreover, the virtual node supports over the air updates, allowing updating of the system with new functionalities, such as improved or novel algorithms, and new 3GPP release specifications, thus avoiding the need to launch new payload for each update/upgrade.

In embodiments, the system supports direct communication with UEs over the range of 5G frequencies, preferably in the frequency range 0.8-3.8GHz. In embodiments, at least one of Frequency Division Duplexing (FDD) and Time Division Duplexing (TDD) may be used.

In embodiments, the system supports direct communication with UEs over the range of 4G, 5G and future 6G frequencies. Advantageously, this provides efficient exploitation of the satellites along their whole lifespan.

In embodiments the virtual node serves multiple operators in the same geographical area. In embodiments, multi-mobile network operator (MNO) support may be tightly coupled with the RF front-end to support multi-band operation on discontinuous bands.

In embodiments, the virtual node allows for dynamic reconfiguration of the system and dynamic scheduling of payload resources.

In embodiments, the DBF front end generates a feeder beam to connect to a ground station.

In embodiments, the DBF front end uses quasi-earth-fixed beams. Advantageously, the coverage area is kept in a concrete range, and the beams can move in both dimensions to maximizes the performance of the system.

In embodiments, the DBF front end is tightly-coupled to the virtual node. Advantageously, this provides a dynamic beamforming solution wherein the DBF can position each beam such, that it serves an optimal number of users based on their requirements, regarding the throughput of each UE and the aggregate throughput per beam and the aggregate throughput of the satellite system.

In embodiments, the system comprises a further ground station. In embodiments, the further ground station is collocated with existing ground sites of the MNOs, facilitating ease of use and interconnection with the core network of the MNO. In embodiments, the ground station comprises a high gain steerable antenna. In embodiments, the high gain steerable antenna is a digital array or a motorized reflector. In embodiments, the ground station further comprises an RF to baseband chain. Advantageously, this avoids the need to build additional sites.

In embodiments, to maximize the data rate in the feeder link, the DBF continuously optimizes the beamforming such that the SINR towards a ground station is maximized. This may be achieved by always steering the beam towards the ground station, such that it is positioned in, or closely to, the centre of the beam. This capacity maximization will be coupled with a satellite base station scheduler, such that the ground station gets the required Physical Resource Blocks (PRBs), subject to maximize the aggregate the overall beam capacity and the data rate to the other UEs in the same beam. Additionally, the DBF may minimize the inter-beam interference in the position of the ground station, such that all other beams nulls, or low power sidelobes, are over the area of the ground station.

In embodiments, the system utilises spatial multiplexing. In embodiments, the DBF optimizes its beams such as to minimize inter-beam interference and maximize the given UEs throughput and Signal-to-Interference-plus-Noise Ratio (SINR). This may be achieved by transmitting the beams in its nulls, or low power sidelobes. In other embodiments, if specific UEs have low SINR requirements, the DBF can position the beams outside the beam nulls, which will increase the inference, but gives a larger number of possibilities where and how to position the beams with respect to each other, and with respect to the UEs on the ground. Additionally, the DBF can dynamically adapt the precoders and use different windowing solutions, such as Blackman, Hamming, Kaiser, etc, in order to maximize the overall capacity of the satellite system.

In embodiments, co-operative beamforming is performed using collaborative multiple-input, multiple-output (MIMO). The system may be utilized to synchronize two or more satellites for a specific UE, with respect to timing advances, such that both streams are received at the same time and do not cause inter-slot interference and improve the overall capacity to the given user(s).

In embodiments, the system provides dynamic transmission when covering a first region and crossing a border to enter a second region. Cross-border interference management is achieved on a per-beam basis by either an on-off approach in which the beams are switched on when the satellite is over the serving region and switched off when entering a non-serving region. Since the beam management is completely digital, on-off switching can easily be performed in the baseband in collaboration with the serving eNodeB/gNodeB cell.

Alternatively, in other embodiments, a band-hopping approach is used which assumes that two concurrent regions are served by the satellite, but use different frequency bands. In this case the beams that leave the first serving region and enter the second serving region can be reconfigured to use a different channel and bandwidth. In embodiments, the dynamic band-hopping can be performed by utilizing the concept of noncontinuous carrier aggregation.

In embodiments, band-hopping can also be combined with the on-off approach where a beam is switched off and then activated on a different band in the new serving region.

### Brief Description of the Drawings

Figure 1 shows a high-level block diagram of a satellite communications system according to an embodiment of the invention;
Figure 2 shows an inter-satellite link operation of a satellite communications system according to an embodiment of the invention;
Figure 3 shows an exemplary system architecture of a satellite base station forming part of a satellite communications system according to an embodiment of the invention; and
Figure 4 shows a high-level system architecture of the satellite communications system.

### Detailed Description

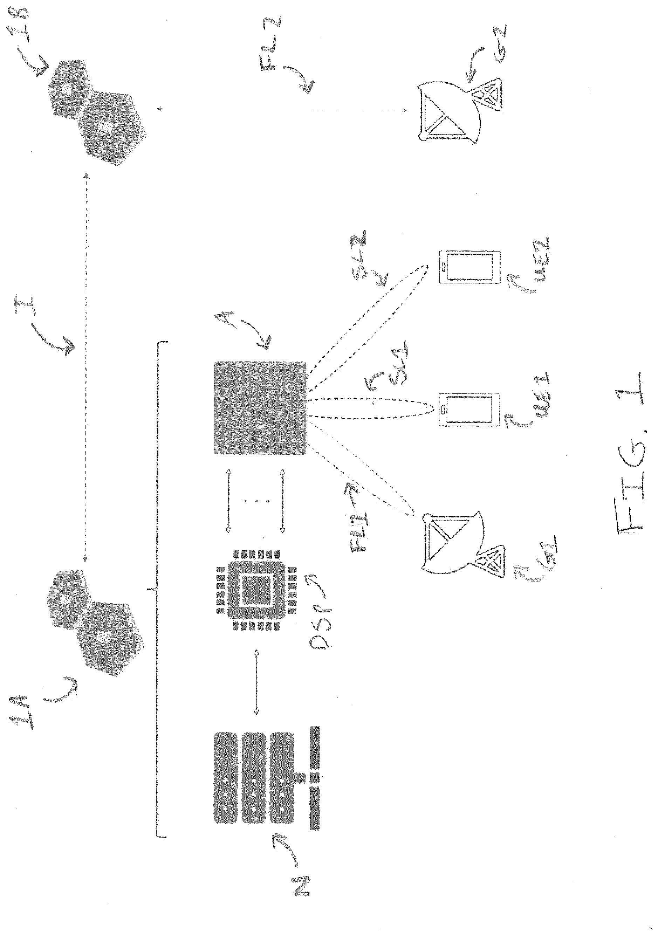

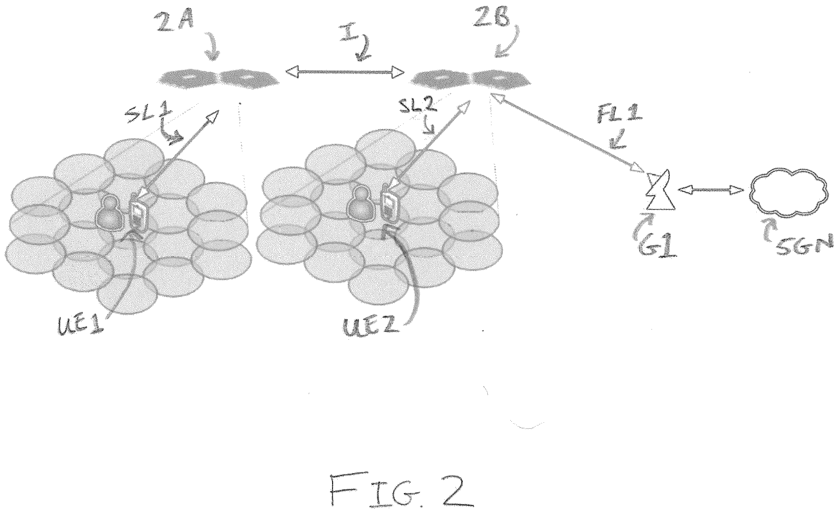

Figure 1 shows detail of satellite communications system. The system comprises a pair of satellite base stations 1A, 1B which are linked by an intersatellite optical link I. The link I is further described with reference to Fig. 2.

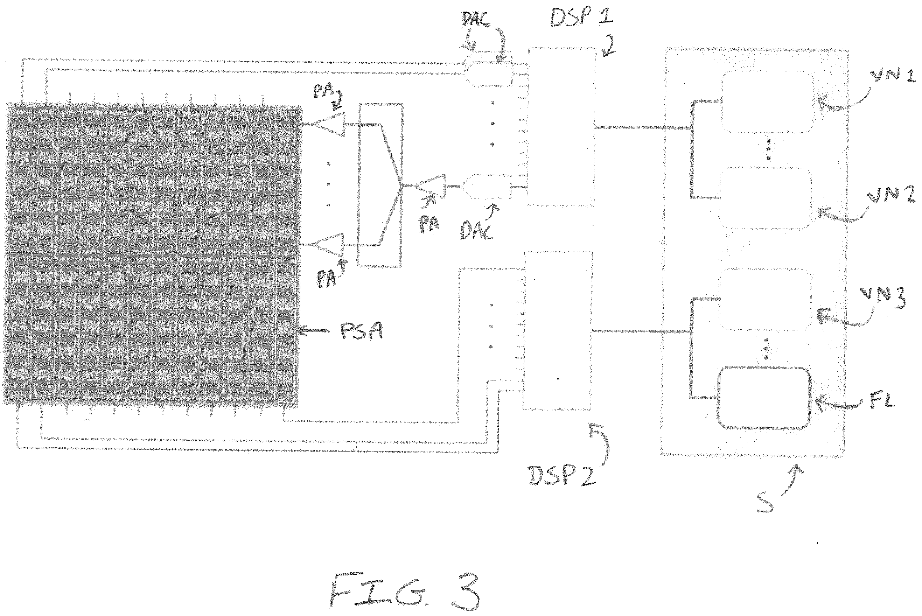

The exemplary satellite module 1A comprises three main components, a virtualised eNodeB/gNodeB N-DSP hardware, and a planar antenna array A. This architecture is further described below with reference to Fig. 3. The planar antenna array is realised as a fully digital array of radiating elements.

The planar antenna array A of the satellite module 1A connects to at least one ground station G1 via an in-band feeder link FL1. The satellite can be connected to multiple ground stations simultaneously if required, based on the underlying user and traffic profile, as well as the orbital configuration and constellation. Similarly, the planar antenna array (not shown) of satellite module 1B is connected to a ground station G2 by an out-band feeder link FL2. The in-band feeder link FL1 operates within the service link spectrum, and therefore offers lower system complexity. The out-band feeder link FL2 operates in the Ka-bands and therefore provides increased service capacity in comparison to in-band.

The planar antenna array A also connects to terrestrial user equipment UE1 and UE2 via service links SL1 and SL2 respectively. SL1 and SL2 operate in parallel by using the complete MNO resources dedicated for NTN, by means of beamforming and spatial multiplexing.

Figure 2 shows detail of the inter-satellite optical link I between a pair of exemplary satellite base stations 2A, 2B. Base station 2A communicates with a first user equipment UE1 via a first service link SL1 and base station 2B communicates with a second user equipment UE2 via a second service link SL2. Base station 2B also communicates with ground station G1 which is in connection with a 4G/5G network 5GN.

The link I permits connectivity of a satellite not in view of a ground station thanks to the connection through another satellite. Furthermore, interconnection of two or more satellites forms a synthetic large sparse array that increases the capacity generated by the two satellites together with respect to the equivalent standalone operation. This significantly enhances the capability of the system, in particular its overall reliability and performance by improving the data throughput and spatial resolution of the system which contributes to increase the redundancy and reduce the latency.

The interconnection between satellite base stations 2A, 2B is achieved via provision of a laser communications terminal (not shown). The terminal is miniaturised with a low weight such that it may fit within the flat shape of a satellite module. The terminals can establish a link to up to 1000km allowing a flexible management of the intersatellite optical link I. The terminal comprises a Beacon-based Acquisition and Tracking Subsystems with Tailored PAT Control and Sensors, Realtime Simulation Software, and Coherent ACQ/Tracking Modules as hybrids.

Figure 3 shows the system architecture of a communications payload subsystem based on a hybrid beamforming design and an in-band feeder link. A planar antenna array A comprises a passive subarray PSA. The hybrid design of the array A allows for multiple passive elements jointly featuring specific beam patterns will be linked to a single channel (ADC for RX, DAC for TX), allowing for further digital signal processing for digital beamforming. Alternatively, in a fully digital design, each antenna element will be directly connected to a DSP input/output.

In the exemplary architecture illustrated in Figure 3, the array A is connected to digital signal processing (DSP) boards DSP1, DPS2 which take the form of Field-Programmable Gate Arrays (FPGAs). DSP1, DSP2 incorporate algorithms for digital beamforming and per beam signal processing, (e.g. Doppler fix, equalization, etc.) to provide geographical multiplexing and 4G/5G coverage extension through multiple parallel beams. Such FPGAs typically feature a slim profile, measuring just a few centimetres in thickness and are also lightweight, typically weighing tens to hundreds of grams.

DSP1 and DSP2 are further connected to a 5G on-board server, S. The server S in this embodiment is a Commercial Off-The-Shelf (COTS) server which hosts and manages multiple 4G eNodeB and/or 5G gNodeB instances. Each digital beam, represented as an IQ stream of data from the FPGA processors, will be directed to an individual eNodeB/gNodeB instance on the server. These instances will handle all 4G/5G baseband signal processing across layers L1 to L3.

In other embodiments, the server may integrate a 4G/5G core instance connected to the multiple base stations. In the case of an in-band 4G/5G feeder link design, the server will assign a portion of the beams for 4G/5G compliant communication with a ground station.

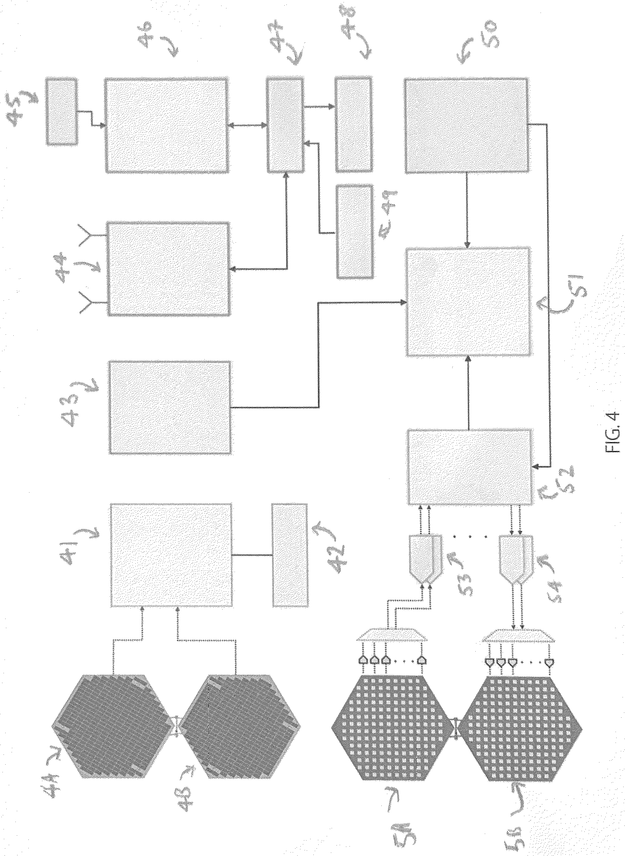

Figure 4 shows a high-level system architecture of the satellite communication system comprising several subsystem components which facilitate operation of the system. The system comprises a pair of solar arrays 4A, 4B which is utilized for power generation based on solar radiation and is directly connected to the main power subsystem 41.

The power subsystem 41 provides and facilitates the necessary electrical power for optimal operation of all other subsystem components and comprises a Battery System Line and a Power Distribution Unit 42 used to distribute electrical power to multiple components within a system. It is also able to equalize and keep the voltage to a predefined level, and fosters overload protection, and circuit breakers.

The system further comprises an optical inter-satellite link (OISL) subsystem 43, which is a communication subsystem that fosters inter-satellite communication, with high data rates, over long distances. The OISL is especially important for the satellite constellation, in order to support functionalities, such as multi-satellite cooperative transmissions (Cooperative MIMO), as well as multi-hop communication, for satellites that do not have a ground station in sight.

The system further comprises a Telemetry, Tracking, and Command (TTC) subsystem 44, responsible for the ground operations to monitor, control, and track the spacecraft. The TTC subsystem sends real-time data from the satellite to the ground about its health, performance, and operational status. It allows ground operators to send commands to control satellite functions, and ensures safe operations, software updates, and failure recovery.

The system further comprises PNT subsystem 50, responsible for tracking and providing information to the spacecraft for its position, time, and doppler related information. This data is especially important to the Communication Payload and the On-Board Computer 46.

The system further comprises a Communication payload comprising a Communication Payload PC 51 which runs and operates the virtualized BS. It may also include a light or full 5G Core network, if needed. The PC hosts the Mission profile orchestrator and the internal payload routing between the different communication payload end-points, such as the feeder link, service link and the optical intersatellite links. The PC is based on convectional COTS architectures found on the market, building on top either on x86 or ARM design.

The Communication payload further comprises an FPGA device 52, directly interconnected to the Communication Payload PC, and on which the DSP-related algorithms run and provide Hardware acceleration for functionalities, such as digital beamforming, channel equalization, doppler correction, etc.

The Communication payload further comprises an RF front-end 5A, 5B which comprises the antenna aperture and the active amplification elements, i.e. the power amplifiers in the downlink direction and low-noise amplifiers in the uplink direction. The RF front-end directly interconnects to the FPGA 52, via the ADC 53 and DAC 54.

The system further comprises an On-board Computer (OBC) 46 which is responsible of all the system-related controls and monitoring of the spacecraft, such as the AOCS. The OBC, like the Communication Payload PC, is based on convectional COTS architectures found on the market, building on top of either on x86 or ARM design. The specific design intentionally splits the Comm. Payload and system operations, in-order to provide more robust and reliable (fault-tolerant operation). Additionally, the system design, assumes that the OBC, can take over some or all Comm. Payload functionalities due to specific software, firmware, or hardware failure of the Comm. Payload PC. In this manner the spacecraft increases its robustness to failures in adverse conditions. As the main control point of the satellite, the OBC is connected to multiple sensors and actuators:

An Interface BUS 47 acts as a physical proxy between the OBC and the flight-based actuators and sensors, since many of these components have proprietary interfaces, that cannot be easily used for a connection with a COTS PC.

Inertia (Reaction) Wheels 48 are critical components of a satellite's AOCS which allow precise orientation control without using propellant, making them essential for long-duration missions. The illustrated system comprises three reaction wheels, one for each axis (x,y,z).

Thrusters 48 or alternative devices are used in the spacecraft to generate force for attitude control, station-keeping, orbit correction. Unlike reaction wheels, which adjust orientation using stored angular momentum, thrusters actively expel mass (propellant) to produce thrust. The illustrated system design assumes the use of four trusters on the satellite.

Sun sensors 49 are important components of a satellite's AOCS used to help spacecraft determine their orientation by detecting the position of the Sun relative to the satellite's body. The illustrated system incorporates three sun sensors, one for each axis (x,y,z).

Gyroscopes 49 measure angular velocity (rotation rate) to help the satellite determine and maintain its orientation in space. The illustrated system incorporates three gyroscopes, one for each axis (x,y,z).

Magnetorquers 48 utilize the Earth's magnetic field to help control the orientation (attitude) of spacecraft. Magnetorquers generate torques by interacting with the magnetic field, allowing to supplement the altitude and orbital control. Especially, mitigating the adverse effects of saturation in the reaction wheels. The illustrated system incorporates three magnetorquers, one for each axis (x,y,z).

A camera 45 directly connected to the OBC 46 is used for additional information regarding the structural diagnostics of the satellite.

It will be understood that the embodiments described above show applications of the invention only for the purposes of illustration. In practice, the invention may be applied to many different configurations, the details of which are straightforward for the person skilled in the art to implement.

## Claims

1. A satellite communication system comprising:
at least one satellite base station and
at least one ground station, preferably a user equipment (UE),
wherein the at least one satellite base station is equipped with a software-defined virtual node and a digital beam forming (DBF) front-end configured for direct connection with the at least one UE.

2. A satellite communication system according to claim 1 wherein the satellite base station is configured to fly in low earth orbit (LEO), more preferably in very low earth orbit (VLEO).

3. A satellite communication system according to either claim 1 or claim 2, wherein the at least one satellite base station comprises two interconnected satellite modules.

4. A satellite communication system according to claim 3 wherein the satellite modules are interconnected by at least one of mechanical or electrical means.

5. A satellite communication system according to either claim 3 or claim 4 wherein the satellite modules comprise an integrated solar panel on a first surface.

6. A satellite communication system according to cany of claims 3 to 5 wherein the satellite modules comprise an antenna aperture on a second surface.

7. A satellite communication system according to any of claims 3 to 6 wherein the satellite modules comprise digital signal processor (DSP) boards.

8. A satellite communication system according to any preceding claim wherein the DBF front end performs real-time per-beam signal processing.

9. A satellite communication system according to any preceding claim further comprising at least another satellite base station.

10. A satellite communication system according to claim 9 wherein each of the at least one satellite base station and at least another satellite base station comprise a laser communication terminal configured to allow inter-satellite links between the satellite base stations.

11. A satellite communication system according to any claim 10 wherein the satellite base stations are linked to form a mesh network.

12. A satellite communication system according to claim 11 wherein the system employs optimization algorithms to derive an optimal constellation arrangement.

13. A satellite communication system according to any preceding claim wherein the software-defined virtual node is suitable for at least one of 4G, 5G and 6G.

14. A satellite communication system according to any preceding claim 13 wherein the virtual node allows for dynamic reconfiguration of the system and dynamic scheduling of payload resources.

15. A satellite communication system according to any preceding claim wherein the DBF front end is tightly-coupled to the node.

16. A satellite communication system according to any preceding claim wherein the system utilises spatial multiplexing to achieve higher aggregate capacity per satellite base station.

17. A satellite communication system according to claim 16 wherein the DFB manages the spatial multiplexing to maximize at least one of the aggregate satellite base station capacity, and the per beam capacity based on the UE location and QoS requirements.

18. A satellite communication system according to any preceding claim wherein the at least one satellite station connects to the at least one ground station via an in-band feeder link.

19. A satellite communication system according to any preceding claim wherein the system can operate on multiple spectrum bands, preferably simultaneously.
